**Europäisches Patentamt**

**European Patent Office**

**Office européen des brevets**

(19)

(11) Veröffentlichungsnummer : **0 098 963**
**B1**

# (12) EUROPÄISCHE PATENTSCHRIFT

(45) Veröffentlichungstag der Patentschrift :
02.01.86

(21) Anmeldenummer : **83105498.6**

(22) Anmeldetag : **03.06.83**

(51) Int. Cl.⁴ : **B 29 B   7/00**, B 01 F 15/00

(54) **Innenmischer.**

(30) Priorität : **25.06.82 CH 3916/82**

(43) Veröffentlichungstag der Anmeldung :
**25.01.84 Patentblatt 84/04**

(45) Bekanntmachung des Hinweises auf die Patenterteilung : **02.01.86 Patentblatt 86/01**

(84) Benannte Vertragsstaaten :
**CH DE FR GB IT LI**

(56) Entgegenhaltungen :
**DE-A- 1 961 970**
**DE-A- 2 005 313**
**FR-A- 1 321 176**

(73) Patentinhaber : **AG Ernest Fischer's Söhne**
**Bleicheweg**
**CH-5605 Dottikon (CH)**

(72) Erfinder : **Schnellmann, Oscar**
**Spielwiesenstrasse 19**
**CH-8050 Zürich (CH)**

(74) Vertreter : **Riederer, Conrad A., Dr.**
**Bahnhofstrasse 10**
**CH-7310 Bad Ragaz (CH)**

## Beschreibung

Die Erfindung betrifft einen Innenmischer mit einem mit Durchtrittsöffnungen für das zu verarbeitende Material versehenen Rotor, welcher in einem Zylinderraum durch ein erstes Antriebsorgan drehbar und durch ein zweites Antriebsorgan axial hin- und herverschiebbar ist.

Ein solcher Innenmischer ist seit über mehr als zehn Jahren bekannt. Er hat den Vorteil, dass durch die gleichzeitige Drehung und axiale Verschiebung des Rotors strangähnliche Masseteile kontinuierlich abgeschert und sowohl in Radialrichtung wie in Axialrichtung zwangsweise miteinander vermengt werden, wobei sehr grosse Scherkräfte bzw. Schergradienten erreicht werden können. Da das Misch- und/oder Plastifiziergut ausserdem gegen die Rotorfläche zwischen den Durchtrittsöffnungen gepresst wird, können auch grosse Friktionskräfte erreicht werden. Solche Friktionskräfte spielen eine grosse Rolle beim Misch- und/oder Plastifiziervorgang bis in den molekularen Bereich hinein. Es hat sich auch gezeigt, dass bei der bekannten Vorrichtung nicht nur fliessfähiges oder plastisches Material verarbeitet werden kann, sondern dass auch pulverförmige, granulatförmige oder stückförmige Materialien allein oder zusammen mit fliessfähigen und/oder plastischen Materialien verarbeitet werden können. Falls es sich dabei um thermoplastische Stoffe handelt, werden diese während des Misch- und/oder Plastifiziervorgangs in erforderlichem Ausmass plastifiziert. Wenn es sich um anorganische oder nicht-thermoplastische Materialien handelt, werden diese im erforderlichen Ausmasse zerkleinert, vermahlen und/oder dispergiert. Es können aber auch Kunststoffe, Kautschuk und gegebenenfalls andere hochviskose oder flüssige Materialien ausserordentlich wirksam mit pulverförmigen oder granulafförmigen Füllstoffen, Pigmenten, Farbstoffen oder chemischen Zusätzen homogen gemischt und plastifiziert werden, beispielsweise Rohkautschuk mit Russ und anderen üblichen Zusätzen.

Trotz dieser im Grundkonzept der vorgenannten Vorrichtung innewohnenden Vorteile konnten sich in der Praxis solche Innenmischer nicht durchsetzen. So blieb das Problem der Reinigung des Rotors ungelöst. Vor der Verwendung des Innenmischers für ein anderes Material oder nach der Verarbeitung der letzten Charge an einem Arbeitstag musste der Rotor auf mühsame Weise gereinigt werde, indem eine Durchtrittsöffnung nach der anderen mit einem Handwerkzeug vom darin enthaltenen Material befreit wurde. Dies erforderte vielfach einen hohen Kraftaufwand, da das Material oft dazu neigt, an Metallteilen anzuvulkanisieren. Bei diesen schmutzigen Handarbeiten konnte es auch vorkommen, dass der Rotor beschädigt wurde oder der Arbeiter sich bei einem Abgleiten des Werkzeuges verletzte. Es leuchtet ein, dass bei einer Reinigung einer Durchtrittsöffnung nach der anderen das Material in den letzten Durchtrittsöffnungen Zeit hat, sich zu verfestigen oder anzuvulkanisieren. Mag daher die Reinigungsarbeit am Anfang noch einfach sein, so wird sie mit fortschreitender Zeit immer schwieriger, was denn auch den Grund darstellt, dass der mit der Reinigung beauftragte Arbeiter unter hohem Zeitdruck steht, was wiederum die Beschädigungs- und Unfallgefahr erhöht.

Es ist darum Aufgabe der vorliegenden Erfindung, den eingangs erwähnten Innenmischer derart zu verbessern, dass die Reinigung des Rotors rasch und zumindest weitgehend ohne manuelle Arbeit durchgeführt werden kann.

Zu diesem Zwecke ist der eingangs erwähnte Innenmischer dadurch gekennzeichnet, dass eine Patrize vorgesehen ist, welche mit den Durchtrittsöffnungen des Rotors übereinstimmende Finger aufweist, dass Positioniermittel vorgesehen sind, um Rotor und Patrize so aufeinander auszurichten, dass die Durchtrittsöffnungen des Rotors mit den Fingern der Patrize fluchten, und dass eine Antriebsvorrichtung vorgesehen ist, um eine axiale Relativbewegung zwischen Rotor und Patrize zu erzeugen. Diese Ausbildung hat den Vorteil, dass sämtliche Durchtrittsöffnungen des Rotors in einem einzigen Arbeitsgang gereinigt werden können. Zu diesem Zwecke erfolgt eine Relativbewegung zwischen Rotor und Patrize, wobei von den Fingern der Patrize sämtliche Durchtrittsöffnungen gleichzeitig von dem darin haftenden Material befreit werden. Da das Material in diesem Moment noch plastisch ist, ist die Reinigung sehr leicht durchzuführen. Da für diese Reinigung sehr wenig Zeit benötigt wird und somit an anderen Stellen des Rotors möglicherweise noch anhaftende Materialteile keine Zeit gefunden haben, anzuvulkanisieren, ist die restliche Reinigung mit konventionellen Mitteln, zu denen auch Weichmacher oder Lösungsmittel zählen, sehr leicht durchzuführen.

Gemäss einem vorteilhaften Ausführungsbeispiel besteht die Patrize aus mindestens zwei Teilen, die in Ruhestellung getrennt voneinander angeordnet sind und bei der Rotorreinigung in eine Stellung gebracht werden können, in welcher sie die Rotorwelle vor der Reinigung umfassen. Dies hat den Vorteil, dass sich die Teile der Patrize vor der Reinigungsarbeit auf beiden Seiten des Zylinders befinden können, wo sie beim Einfüllen und Entleeren des Materials nicht stören.

Eine weitere Ausführungsform sieht vor, dass die Durchlassöffnungen des Rotors durch radiale Schlitze gebildet werden und dass die Patrizenteile kammartig ausgebildet sind. Bei dieser Ausbildung der Patrize kann der Rotor bei der Reinigung durch die Patrize ganz hindurchgezogen werden. Die kammartige Anordnung der Finger ermöglicht eine solide Ausführung der Finger, so dass die Gefahr klein ist, dass ein solcher Finger abbricht.

Zweckmässigerweise ist jeder Patrizenteil auf einem radial zur Rotorachse angeordneten Schlitten verschiebbar. Die Verwendung eines Schlittens ermöglicht eine genaue Positionierung.

Ein vorteilhaftes Ausführungsbeispiel der Erfindung sieht vor, dass die Positioniermittel ein auf der Rotorwelle festsitzendes Schaltrad mit einer der Anordnung der Durchgangsöffnungen des Rotors entsprechenden Schaltzahnanordnung aufweisen, sowie ein Schaltglied, welches durch ein Antriebsglied in Eingriff mit dem Schaltrad gebracht werden kann, um dieses in eine Position zu drehen, in welcher die Durchlassöffnungen des Rotors mit den Fingern der Patrize fluchten. Auf diese Weise kann eine sehr genaue Positionierung erreicht werden, was enge Toleranzen bei Rotor und Patrize erlaubt. Stimmen aber Rotor und Patrize masslich genau überein, so wird eine umso bessere Reinigung erzielt.

Die Positioniergenauigkeit kann noch erhöht werden, wenn an mindestens einem der Patrizenteile ein Keil vorgesehen ist, welcher in einen radialen Schlitz des Rotors eingreift, wenn die Patrizenteile gegen die Rotorwelle in die Reinigungslage bewegt werden.

Vorteilhaft wird die Antriebsvorrichtung, welche die zur Reinigung des Rotors benötigte axiale Relativbewegung zwischen Rotor und Patrize erzeugt, durch einen hydraulischen Zylinder gebildet, welcher zusätzlich zum zweiten Antriebsorgan, welches im Betrieb die Hin- und Her-Bewegung des Rotors im Zylinder bewirkt, die Rotorwelle axial verschiebt. Es ist wichtig, dass die Hin- und Her-Bewegung des Rotors im Zylinder genau begrenzt wird, damit der Rotor weder am Zylinderboden noch am Zylinderdeckel anstösst. Dadurch, dass eine zusätzliche Antriebsvorrichtung zur Relativbewegung zwischen Rotor und Patrize bei der Reinigung vorgesehen ist, kann dies gewährleistet werden. Vorteilhaft weist die Antriebsvorrichtung, welche die zur Reinigung des Rotors benötigte Relativbewegung zwischen Rotor und Patrize erzeugt, eine gemeinsame Kolbenstange mit dem ebenfalls als hydraulischen Zylinder ausgestalteten zweiten Antriebsorgan auf. Dies führt zu einer besonders einfachen und billigen Konstruktion.

Ein Ausführungsbeispiel der Erfindung wird nun unter Bezugnahme auf die Zeichnung beschrieben. Es zeigt :

Figur 1 einen vertikalen Schnitt durch den Innenmischer und

Figur 2 eine schematische perspektivische Darstellung der für die Rotorreinigung wichtigen Teile des Innenmischers.

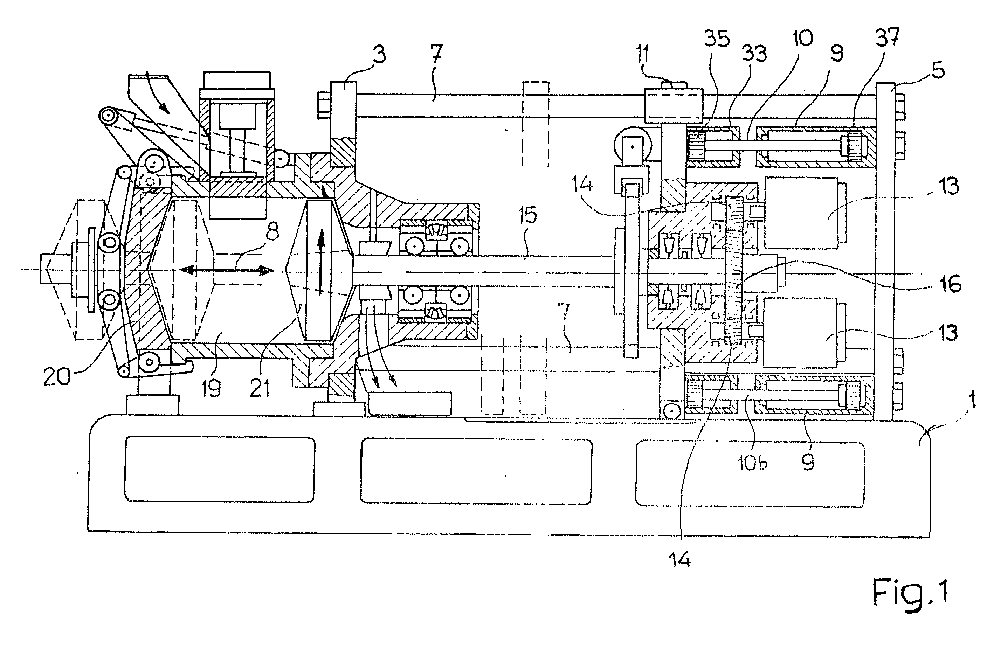

In Figur 1 sind auf dem Maschinenständer 1 Supportplatten 3 und 5 für drei parallel verlaufende Säulen 7 vorgesehen, von denen auf der Zeichnung jedoch nur zwei ersichtlich sind. Auf diesen Säulen 7 befindet sich ein Schlitten 11, der ein erstes Antriebsorgan zum Drehen der Rotorwelle 15 aufweist. Der Schlitten 11 ist auf den Säulen 7 durch ein zweites Antriebsorgan axial verschiebbar. Dadurch wird der Rotor 21 im Zylinderraum 19 im Betrieb hin und her bewegt, wie dies durch den Pfeil 8 augedeutet ist. Beim gezeigten Ausführungsbeispiel dienen als Antriebsorgan für die Hin- und Herbewegung zwei parallel angeordnete hydraulische Zylinder 9, die je auf eine Kolbenstange 10 einwirken. Zum Rotieren des Rotors sind zwei Hydromotoren 13 vorgesehen, welche mit den Zahnrädern 14 das mit der Rotorwelle 15 starr verbundene Zahnrad 16 antrieben. Die Rotorwelle 15 ist mit dem Rotor 21 starr verbunden. Im Betrieb wird der Rotor 21 in Umdrehung versetzt und gleichzeitig im Zylinderraum 19 hin und her bewegt (Pfeil 8), bis das zu verarbeitenden Material die gewünschten Eigenschaften besitzt. Es kann dann nach dem Oeffnen des Deckels 20 durch eine entsprechende Bewegung des Rotors 21 aus dem Zylinder 19 ausgestossen werden.

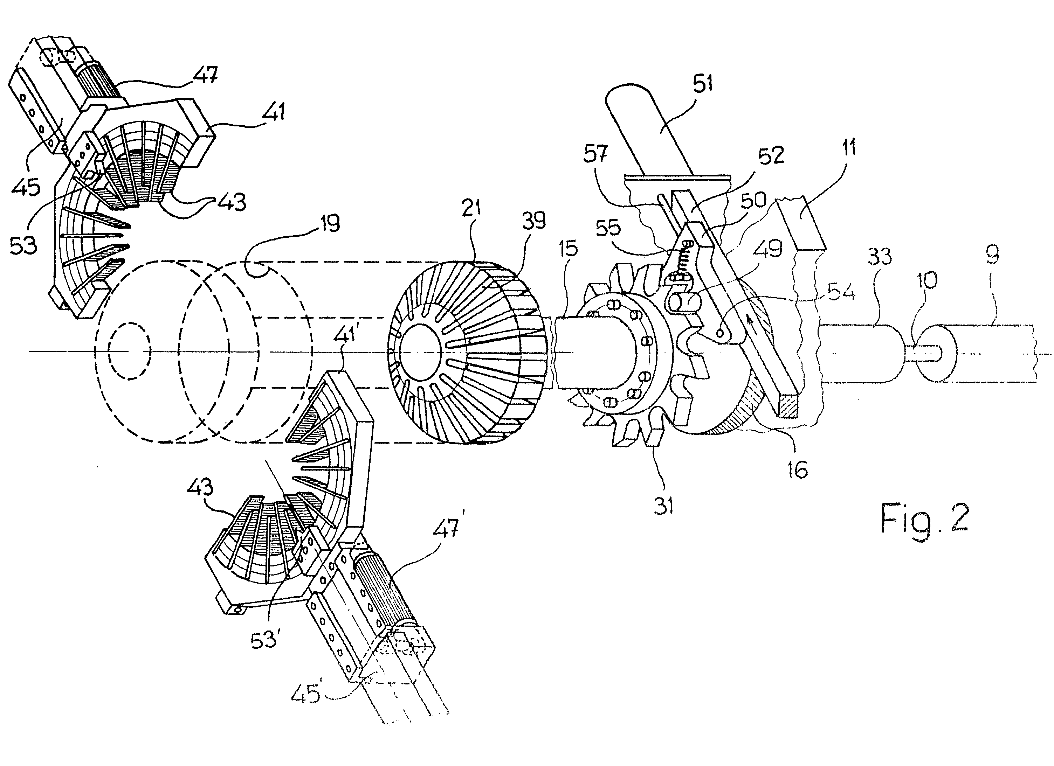

Figur 2 zeigt schematisch und in perspektivischer Darstellung die zur Reinigung des Rotors notwendigen Elemente. Wie bereits erwähnt sind Rotor 21 und Zahnrad 16 fest auf der in Figur 2 verkürzt dargestellten Rotorwelle 15 angebracht. Ebenfalls fest auf der Welle 15 befindet sich das Schaltrad 31. Eine axiale Verschiebung des Rotors 21 ist durch die beiden hydraulischen Zylinder 9 und 33 möglich, welche auf den Wagen 11 einwirken, in welchem die Rotorwelle 15 und die Hydromotoren 13 (Fig. 1) für den Drehantrieb angeordnet sind. Während bei dem in Figur 1 gezeigten Ausführungsbeispiel je ein Paar Zylinder 9 und 33 vorgesehen sind, ist der Einfachheit halber in Figur 2 nur je einer der Zylinder 9 und 33 dargestellt.

Es ist nun zu beachten, dass, wie insbesondere aus Figur 1 ersichtlich ist, die Zylinder 9 und 33 auf eine gemeinsame Kolbenstange 10 einwirken können. Beim Misch- und Plastifiziervorgang befindet sich der Kolben 35 (Fig. 1) des Zylinders 33 in der in Figur 1 eingezeichneten Stellung. Durch abwechslungsweise von der einen oder anderen Seite her erfolgende Beaufschlagung kann der Kolben 37 des Zylinders 9 hin und her bewegt werden, so dass der Rotor 21 von einem Ende des Zylinders zum anderen in Richtung der Pfeile 8 hin und her bewegt wird. Soll das plastifizierte Material aus dem Zylinder 19 ausgestossen werden, so wird der Deckel 20 geöffnet und durch entsprechende Beaufschlagung der Kolben 37 in den Zylindern 9 der Rotor 21 in die im Zylinder 19 gestrichelt eingezeichnete Lage gebracht. Soll nun der Rotor 21 gereinigt werden, so wird der Zylinder 33 betätigt, damit er eine zusätzliche Bewegung des Schlittens 11 veranlasst, um den Rotor in die in Figur 1 ausserhalb des Zylinders 19 gezeigten gestrichelte Lage zu bringen.

Wie aus Figur 2 ersichtlich, besitzt der Rotor 21 radiale Schlitze 39. Zur Reinigung dieser Durchlassöffnungen bildenden Schlitze 39 ist nun eine Patrize vorgesehen, die aus den beiden Teilen 41, 41' besteht, welche mit den Durchlassöffnungen 39 übereinstimmende Finger 43 aufweist. In der Ruhestellung sind die Patrizenteile 41, 41' getrennt voneinander angeordnet. Sie können aber zur Rotorreinigung in eine Stellung gebracht werden, in welcher sie die Rotorwelle 15 umfassen. Wird nun der Zylinder 33 betätigt, dass er die Rotorwelle 15 in Richtung des Zylinderraumes 19 bewegt, so greifen die Finger 43 in die Durchlassöffnungen 39 ein und befreien diese Oeffnungen von dem darin enthaltenen Material. Nach der Reinigung kann der Rotor durch den Zylinder 9 wieder in den Zylinderraum 19 zurückgezogen werden, wobei nach der Einfüllung neuen Materials der Deckel 20 verschlossen wird, so dass der Innenmischer wieder seine Arbeit aufnehmen kann.

Wenn auch beim gezeigten Ausführungsbeispiel die Patrizenteile kammartig ausgebildet sind, um in die als radiale Schlitze 39 ausgebildeten Durchlassöffnungen des Rotors 21 einzugreifen, ist doch ersichtlich, dass die Durchlassöffnungen auch z. B. durch zylindrische Bohrungen gebildet werden könnten. Dementsprechend müsste die Patrize statt Finger der gezeichneten Art in die Bohrungen passende zylindrische Stifte aufweisen. Eine solche Ausgestaltung würde allerdings bedingen, dass nach dem Einfahren der Patrize in den Rotor die Patrize wieder ausgefahren werden muss, bevor der Rotor in die Kammer 19 zurückgefahren werden kann. Demgegenüber bringt die kammartige Ausbildung der Patrizenteile 41, 41' eine erhebliche Vereinfachung, da dann zur Reinigung des Rotors ein einfaches Durchkämmen genügt.

Damit die Patrizenteile 41, 41' genau positioniert werden können, sind sie auf Schlitten 45, 45' gelagert. Hydraulische oder pneumatische Zylinder 47, 47' sorgen für die entsprechende Bewegung der Schlitten 45, 45'.

Wenn es auch möglich wäre, eine Uebereinstimmung von Matrize und Patrize durch manuelle Verstellung dieser Teile zueinander zu bewirken, so ist es doch von wesentlichem Vorteil, wenn Positioniermittel vorgesehen sind, um Rotor 21 und Patrize 41, 41' aufeinander auszurichten, dass die Durchtrittsöffnungen 39 mit den Fingern 43 fluchten. Diese Positioniermittel bestehen im wesentlichen aus dem Schaltrad 31 und dem Schaltglied 49, das auf das Schaltrad 31 einwirken kann, um eine kleine Drehung der Rotorwelle 15 zu bewirken. Als Antriebsglied für das Schaltglied 49 wirkt ein hydraulischer oder pneumatischer Zylinder 51.

Bei der in Figur 2 gezeigten Ausgestaltung trägt eine vom Zylinder 51 hin- und her bewegliche Stange 52 eine Klinke 50 mit dem Schaltglied 49. Die Klinke ist auf einem Zapfen 54 auf der Stange 52 gelagert und eine Feder 55 ist bestrebt, die Klinke in die eingezeichnete Lage zu ziehen. Die Bewegung der Stange 52 mit dem Schaltglied 49 wird durch den Anschlag 57 begrenzt.

Wenn die Rotorwelle 15 dreht, befindet sich das Schaltglied 49 nicht in Eingriff mit dem Schaltrad 31. Soll aber eine Positionierung des Rotors 21 zur Reinigung erfolgen, so bewirkt der Zylinder 51 eine Bewegung der Stange 52 in Pfeilrichtung. Das Schaltglied 49 erfasst deshalb einen Zahn des Schaltrades 31 und bewegt sich, bis die Klinke 50 am Anschlag 57 anschlägt. Die Zylinder 47, 47' bringen dann die Keile 53, 53' in Eingriff mit radialen Schlitzen 39 des Rotors 21. Der Rotor 21 ist nun positioniert und der Zylinder 51 bewegt die Stange 52 in die Ruhelage zurück, wo das Schaltglied 49 nicht mehr in Eingriff mit dem Schaltrad 31 steht.

**Patentansprüche**

1. Innenmischer mit einem mit Durchtrittsöffnungen (39) für das zu verarbeitende Material versehenen Rotor (21), welcher in einem Zylinderraum (19) durch ein erstes Antriebsorgan (13) drehbar und durch ein zweites Antriebsorgan (9) axial hin- und herverschiebbar ist, dadurch gekennzeichnet, dass eine Patrize (41, 41') vorgesehen ist, welche mit den Durchtrittsöffnungen (39) des Rotors (21) übereinstimmende Finger (43) aufweist, dass Positioniermittel (49, 31, 53, 53') vorgesehen sind, um Rotor (21) und Patrize (41, 41') so aufeinander auszurichten, dass die Durchtrittsöffnungen (39) des Rotors (21) mit den Fingern (43) der Patrize (41, 41') fluchten, und dass eine Antriebsvorrichtung (33) vorgesehen ist, um eine axiale Relativbewegung zwischen Rotor (21) und Patrize (41, 41') zu erzeugen.

2. Innenmischer nach Anspruch 1, dadurch gekennzeichnet, dass die Patrize aus mindestens zwei Teilen (41, 41') besteht, die in Ruhestellung getrennt voneinander angeordnet sind und bei der Rotorreinigung in eine Stellung gebracht werden können, in welcher sie die Rotorwelle (15) umfassen.

3. Innenmischer nach Anspruch 1 oder 2, dadurch gekennzeichnet, dass die Durchlassöffnungen des Rotors (21) durch radiale Schlitze (39) gebildet werden und dass die Patrizenteile (41, 41') kammartig ausgebildet sind.

4. Innenmischer nach Anspruch 2 oder 3, dadurch gekennzeichnet, dass jeder Patrizenteil (41, 41') auf einem radial zur Rotorachse angeordneten Schlitten (45, 45') verschiebbar ist.

5. Innenmischer nach einem der Ansprüche 1 bis 4, dadurch gekennzeichnet, dass die Positioniermittel ein auf der Rotorwelle (15) festsitzendes Schaltrad (31) mit einer der Anordnung der Durchtrittsöffnungen (39) des Rotors (21) entsprechenden Schaltzahnanordnung aufweisen, sowie ein Schaltglied (49), welches durch ein Antriebsglied (51) in Eingriff mit dem Schaltrad (31) gebracht werden kann, um dieses in die Position zu drehen, in welcher die Durchtrittsöffnungen (39) des Rotors (21) mit den Fingern (43) der Patrize (41, 41') fluchten.

6. Innenmischer nach Anspruch 5, dadurch gekennzeichnet, dass an mindestens einem der Patrizenteile (41, 41') ein Keil (53, 53') vorgesehen ist, welcher in einen radialen Schlitz (39) des Rotors (21) eingreift, wenn die Patrizenteile (41, 41) gegen die Rotorwelle (15) hin in die Reinigungslage bewegt werden.

7. Innenmischer nach einem der Ansprüche 1 bis 6, dadurch gekennzeichnet, dass die Antriebsvorrichtung (33), welche die zur Reinigung des Rotors (15) benötigte axiale Relativbewegung zwischen Rotor (21) und Patrize (41, 41') erzeugt, durch einen hydraulischen Zylinder (33) gebildet wird, welcher zusätzlich zum zweiten Antriebsorgan (9), welches in Betrieb die Hin- und Herbewegung des Rotors (21) im Zylinder (19) bewirkt, die Rotorwelle (15) axial verschiebt.

8. Innenmischer nach Anspruch 7, dadurch gekennzeichnet, dass die Antriebsvorrichtung (33), welche die zur Reinigung des Rotors (21) benötigte Relativbewegung zwischen Rotor (21) und Patrize (41, 41') erzeugt, eine gemeinsame Kolbenstange (10) mit dem ebenfalls als hydraulischen Zylinder ausgebildeten zweiten Antriebsorgan (9) aufweist.

9. Innenmischer nach einem der Ansprüche 5 bis 8, dadurch gekennzeichnet, dass das Schaltglied (49) auf einer Klinke (50) angeordnet ist, welche an eine Stange (52) angelenkt ist, die vom Antriebsglied (51) hin- und herbeweglich ist.

10. Innenmischer nach Anspruch 9, dadurch gekennzeichnet, dass die Klinke (50) vom Antriebsglied (51) zu einem Anschlag (57) beweglich ist.

## Claims

1. Internal mixer comprising a rotor (21) with passages (39) for the material to be processed, said rotor (21) being rotatable by first drive means (13) and axially movable back and forth in a cylinder chamber (19) by second drive means (9), characterized in that a punch (41, 41') is provided, said punch having prongs (43) corresponding to the passages (39) of the rotor (21), in that positioning means (49, 31, 53, 53') are provided to register rotor (21) and punch (41, 41') so as to provide alignment of the passages (39) of the rotor (21) and the prongs (43), and in that a drive unit (33) is provided to generate an axial movement between rotor (21) and the punch (41, 41').

2. Internal mixer as claimed in claim 1, characterized in that the punch comprises at least two parts (41, 41') which are in rest position separated from each other, and, for cleaning the rotor, can be brought into a position in which they encircle the rotor shaft (15).

3. Internal mixer as claimed in claim 1 or 2, characterized in that the passages of the rotor (21) are radial slots (39), and in that the parts (41, 41') of the punch are comb-like.

4. Internal mixer as claimed in claim 2 or 3, characterized in that each part (41, 41') of the punch is located on a sledge (45, 45') movable radially to the rotor axis.

5. Internal mixer as claimed in one of the claims 1 to 4, characterized in that the positioning means comprise a gear (31) located on the rotor shaft (15) and having an arrangement of teeth corresponding to the arrangement of passages (39) of the rotor (21), and a detent member (49) capable of being engaged with the gear (31) by a drive member (51) to move the gear (31) into the position in which the passages (39) of the rotor (21) are aligned with the prongs (43) of the punch (41, 41').

6. Internal mixer as claimed in claim 5, characterized in that at least on one part (41, 41') of the punch a wedge (53, 53') is provided capable of engaging a radial slot (39) of the rotor (21) when the parts (41, 41') of the cleaning means are moved towards the rotor shaft (15) into the cleaning position.

7. Internal mixer according to one of the claims 1 to 6, characterized in that the drive unit (33) generating the axial relative motion between the rotor (21) and the punch (41, 41') required for cleaning the rotor (15) comprises a hydraulic cylinder (33) which, in addition to the second drive means (9) for moving back and forth the rotor (21) in the cylinder, is capable to move the rotor shaft (15) axially.

8. Internal mixer according to claim 7, characterized in that the drive unit (33) required for generating the necessary relative motion between rotor (21) and punch (41, 41') for cleaning the rotor (21) comprises a common piston rod (10) with the second drive means (9), which is also a hydraulic cylinder.

9. Internal mixer according to one of the claims 5 to 8, characterized in that the detent member (49) is located on a pawl (50) pivotally mounted on a rod (52) capable of being driven back and forth by the drive member (51).

10. Internal mixer according to claim 9, characterized in that the pawl (50) is movable by the drive member (51) to a stop (57).

## Revendications

1. Mélangeur interne, comportant un rotor (21) qui est muni d'ouvertures de passage (39) pour la matière à travailler et qui peut être mis en rotation, dans une chambre de cylindre (19), par un premier organe de commande (13) et être déplacé en un mouvement axial de va-et-vient par un second organe de commande (9), caractérisé en ce qu'il est prévu un mandrin de curage (41, 41') qui comporte des doigts (43) coïncidant avec les ouvertures de passage (39) du rotor (21), en ce qu'il est prévu des moyens de positionnement (49, 31, 53, 53') pour orienter le rotor (21) et le mandrin de curage (41, 41') l'un par rapport à l'autre de telle manière que les ouvertures de passage (39) du rotor (21) soient dans l'alignement des doigts (43) du mandrin de curage (41, 41'), et en ce qu'il est prévu un dispositif de commande (33) pour produire un mouvement axial relatif entre le rotor (21) et le mandrin de curage (41, 41').

2. Mélangeur interne selon la revendication 1, caractérisé en ce que le mandrin de curage se compose d'au moins deux parties (41, 41') qui, en position de repos, sont écartées l'une de l'autre et qui, lors du nettoyage du rotor, peuvent être placées dans une position dans laquelle elles embrassent l'arbre (15) du rotor.

3. Mélangeur interne selon la revendication 1 ou 2, caractérisé en ce que les ouvertures de passage du rotor (21) sont constituées par des fentes radiales (39) et en ce que les parties du mandrin de curage (41, 41') sont réalisées à la manière d'un peigne.

4. Mélangeur interne selon la revendication 2 ou 3, caractérisé en ce que chaque partie de mandrin de curage (41, 41') peut être déplacée sur un chariot (45, 45') qui est disposé radialement par rapport à l'axe du rotor.

5. Mélangeur interne selon l'une quelconque des revendications 1 à 4, caractérisé en ce que les moyens de positionnement comportent une roue à rochet (31) qui est calée sur l'arbre (15) du rotor et dont les dents d'encliquetage ont une disposition qui correspond à celle des ouvertures de passage (39) du rotor (21), ainsi qu'un organe d'encliquetage (49) qui peut être mis par un organe de commande (51), en prise avec la roue à rochet (31), afin de faire tourner celle-ci pour la placer dans la position dans laquelle les ouvertures de passage (39) du rotor (21) sont dans l'alignement des doigts (43) du mandrin de curage (41, 41').

6. Mélangeur interne selon la revendication 5, caractérisé en ce qu'il est prévu, sur l'une au moins des parties du mandrin de curage (41, 41'), un coin (53, 53') qui s'engage dans une fente radiale (39) du rotor (21) lorsque les parties du mandrin de curage (41, 41') sont placées contre l'arbre (15) du rotor dans la position de nettoyage.

7. Mélangeur interne selon l'une quelconque des revendications 1 à 6, caractérisé en ce que le dispositif de commande (33), qui produit entre le rotor (21) et le mandrin de curage (41, 41') le mouvement axial relatif qui est nécessaire pour le nettoyage du rotor, est constitué par un cylindre hydraulique (33) qui déplace axialement l'arbre (15) du rotor, en plus du second organe de commande (9) qui produit en service le mouvement de va-et-vient du rotor (21) dans le cylindre (19).

8. Mélangeur interne selon la revendication 7, caractérisé en ce que le dispositif de commande (33) qui produit entre le rotor (21) et le mandrin de curage (41, 41') le mouvement axial relatif qui est nécessaire pour le nettoyage du rotor (21), présente une tige de piston commune (10) avec le second organe de commande (9) qui est également réalisé sous forme de cylindre hydraulique.

9. Mélangeur interne selon l'une quelconque des revendications 5 à 8, caractérisé en ce que l'organe d'encliquetage (19) est disposé sur un cliquet (50) qui est articulé sur une barre (52) qui effectue un mouvement de va-et-vient sous l'action de l'organe de commande (51).

10. Mélangeur interne selon la revendication 9, caractérisé en ce que le cliquet (50) est mobile sous l'action de l'organe de commande (51) jusqu'à ce qu'il rencontre une butée (57).

Fig.1

0 098 963

Fig. 2